Europäisches Patentamt

European Patent Office

Office européen des brevets

(19)

(11) Numéro de publication : **0 081 195
B1**

(12) # FASCICULE DE BREVET EUROPÉEN

(45) Date de publication du fascicule du brevet :
07.05.86

(51) Int. Cl.⁴ : **C 04 B 35/58, C 01 B 21/068**

(21) Numéro de dépôt : **82111127.5**

(22) Date de dépôt : **02.12.82**

(54) **Procédé de fabrication d'un matériau fritté à base de nitrure de silicium, et matériau obtenu par ce procédé.**

(30) Priorité : **08.12.81 FR 8122912**

(43) Date de publication de la demande :
**15.06.83 Bulletin 83/24**

(45) Mention de la délivrance du brevet :
**07.05.86 Bulletin 86/19**

(84) Etats contractants désignés :
**BE DE FR GB IT NL**

(56) Documents cités :
**EP-A- 0 027 639
FR-A- 2 412 509
FR-A- 2 413 346
GB-A- 1 602 821
GB-A- 2 063 302
US-A- 4 143 107
US-A- 4 184 884
US-A- 4 285 895
CHEMICAL ABSTRACTS, vol. 91, no. 4, 23 juillet 1979,
page 160, no. 23395a, Columbus Ohio (USA);**

(73) Titulaire : **CERAVER Société anonyme dite:
12, rue de la Baume
F-75008 Paris (FR)**

(72) Inventeur : **Minjolle, Louis
10, rue Jeanne d'Aibret
F-65000 Tarbes (FR).**
Inventeur : **Chateigner, Serge
28, rue Lacassagne
F-65140 Rabastens de Bigorre (FR)**

(74) Mandataire : **Weinmiller, Jürgen et al
Zeppelinstrasse 63
D-8000 München 80 (DE)**

EP 0 081 195 B1

Jouve, 18, rue St-Denis, 75001 Paris, France

## Description

La présente invention concerne un procédé de fabrication d'un matériau fritté à base de nitrure de silicium, par frittage naturel en présence d'une faible quantité d'oxyde d'yttrium.

On a déjà proposé de fabriquer des objets à base de nitrure de silicium en soumettant au frittage de la poudre de nitrure de silicium, additionnée d'aides de frittage, tels que les oxydes d'yttrium ou de magnésium. Mais la poudre de nitrure de silicium est un produit extrêmement coûteux, qu'il est difficile d'obtenir pur. Pour effectuer un frittage naturel, sans pressage à chaud, il faut partir d'une poudre d'une grande finesse, qui est sensible à l'oxydation par l'oxygène de l'air ou dissous dans l'eau avec lequel elle est mise en présence au cours du traitement. L'oxydation de la poudre rend son frittage difficile ou même impossible dans certains cas.

On a aussi proposé dans le document FR-A-2 353 503 de fabriquer un oxynitrure de silicium et d'aluminium du type dit SiALON, par nitruration et frittage d'un mélange de poudres d'aluminium, de silicium et d'alumine, avec formation d'un produit intermédiaire, broyage, puis mélange de ce produit à l'état pulvérulent avec du nitrure de silicium pulvérulent, et une petite quantité d'un adjuvant de frittage tel que la magnésie, et enfin frittage de ce mélange en un produit céramique dense. Un tel procédé donne après nitruration un produit intermédiaire très difficile à rebroyer, et ne procure pas un matériau fritté de composition proche de celle du nitrure de silicium, mais riche en aluminium et contenant une quantité notable d'oxygène.

La présente invention a pour but de procurer un procédé simple de fabrication d'un matériau fritté de composition proche de celle du nitrure de silicium, à partir de matières premières peu coûteuses, et ne faisant intervenir que des opérations relativement courtes.

Le procédé selon l'invention est caractérisé en ce que l'on soumet à une nitruration initiale sensiblement totale de la poudre de silicium, additionnée d'un peu de poudres d'aluminium et d'oxyde d'yttrium, puis en ce que l'on effectue le frittage du matériau nitruré.

Il répond en outre de préférence à au moins l'une des caractéristiques suivantes :

— On prépare le mélange de poudres de silicium, d'aluminium et d'oxyde d'yttrium par mise en suspension des poudres dans un agent de suspension, puis concentre la suspension par centrifugation et la sèche.

— On soumet la suspension dans cet agent à un broyage à l'aide de billes d'alumine.

— On effectue la nitruration initiale en présence d'un gaz riche en azote, additionné d'une petite quantité d'oxyde de carbone.

— L'oxyde de carbone est obtenu en effectuant la nitruration dans un four de graphite.

— On effectue la nitruration initiale par chauffage du mélange de poudres vers 1 350° à 1 400 °C, pendant au moins 12 heures.

— On soumet le mélange de poudres nitruré au broyage jusqu'à atteindre une dimension moyenne de particules inférieure à 1 μm.

— Le broyage est effectué en milieu aqueux à l'aide de billes d'acier.

Le matériau fritté obtenu par le procédé défini ci-dessus, comprend une phase cristalline de paramètres cristallins voisins de ceux du nitrure de silicium de la variété béta, légèrement décalés, et une phase vitreuse à base d'oxyde d'yttrium, l'ensemble des deux phases comprenant un mélange de nitrure de silicium et de nitrure d'aluminium à 90-100 % en poids de nitrure de silicium et 0-10 % en poids de nitrure d'aluminium, et de l'oxyde d'yttrium en quantités correspondant à 1-10 % en poids, ces quantités étant rapportées au poids total de nitrures. Dans la phase cristalline, les atomes de silicium sont remplacés partiellement par des atomes d'aluminium, et ceux d'azote par des atomes d'oxygène.

Il est décrit ci-après, à titre d'exemples, des procédés de préparation d'un matériau à base de nitrure de silicium selon l'invention.

## Exemple 1

On mélange 83 parties en poids de poudre de silicium, 5 parties de poudre d'aluminium et 12 parties de poudre d'oxyde d'yttrium, par voie humide dans un solvant tel que l'hexane ou l'heptane, par simple délayage ou par passage dans un broyeur muni de billes d'alumine. On obtient une barbotine que l'on concentre par centrifugation, puis que l'on sèche.

Le mélange de poudres est introduit dans un four à induction en graphite à atmosphère d'azote que l'on porte à une température de 1 350°-1 400 °C. Du fait des parois en graphite, il apparaît dans le gaz de nitruration une faible proportion de monoxyde de carbone, ce qui permet d'accélérer la nitruration du mélange de poudres grâce à l'évaporation du monoxyde de silicium SiO formé à partir du film de silice résultant de l'oxydation partielle du silicium.

Après au moins 6 heures de nitruration à 1 300°-1 450 °C, la poudre obtenue est devenue pratiquement insensible à l'eau et aux acides.

Cette poudre est broyée en milieu aqueux à l'aide de billes d'acier jusqu'à une grosseur moyenne de particules inférieure à 1 micron, et voisine par exemple de 0,5 μm. Elle est ensuite purifiée des traces de fer introduites par le broyage par attaque à l'acide chlorhydrique dilué, lavée à l'eau et séchée par essorage, puis passage à l'étuve.

La poudre est ensuite mise en forme par les procédés habituels en technique céramique, par pressage, extrusion, coulage, injection, etc... Elle est ensuite soumise au frittage, par traitement pendant 1 à 15 heures à une température supérieure à 1 600 °C, de préférence sous atmosphère d'azote ou riche en azote.

On obtient un produit de masse spécifique supérieure à 95 % de la masse spécifique théorique, formé de nitrures de silicium et d'aluminium additionnés d'un peu d'oxyde d'yttrium.

Exemple 2

On mélange 89 parties en poids de poudre de silicium, 6 parties de poudre d'aluminium et 5 parties de poudre d'oxyde d'yttrium comme dans l'exemple 1, et effectue par la suite les mêmes opérations que dans l'exemple 1. Après nitruration, broyage de la poudre nitrurée et frittage de pièces mises en forme, on obtient également des pièces frittées de masse spécifique supérieure à 95 % de la masse spécifique théorique.

Bien que les modes opératoires qui ont été décrits ci-dessus dans les exemples paraissent les variantes d'exécution préférables de l'invention, on comprendra que diverses modifications peuvent leur être apportées sans sortir du cadre de l'invention, certaines opérations pouvant être remplacées par d'autres qui joueraient le même rôle technique. En particulier, le mélange des poudres de départ par voie humide peut être remplacé par un mélange par voie sèche. On peut utiliser un gaz de nitruration exempt d'oxyde de carbone, bien que ce dernier facilite la nitruration. Ce gaz peut contenir, outre de l'azote, un gaz rare.

## Revendications

1. Procédé de fabrication d'un matériau fritté à base de nitrure de silicium par frittage naturel en présence d'une faible quantité d'oxyde d'yttrium, caractérisé en ce que l'on soumet à une nitruration initiale sensiblement totale de la poudre de silicium additionnée d'un peu de poudres d'aluminium et d'oxyde d'yttrium, puis en ce que l'on rebroie le mélange de poudres nitruré, le met en forme et le soumet au frittage.

2. Procédé selon la revendication 1, caractérisé en ce que l'on prépare le mélange de poudres de silicium, d'aluminium et d'oxyde d'yttrium par mise en suspension des poudres dans un agent de suspension, puis concentre la suspension par centrifugation et la sèche.

3. Procédé selon la revendication 2, caractérisé en ce que l'on soumet la suspension dans ledit agent à un broyage à l'aide de billes d'alumine.

4. Procédé selon l'une des revendications 1 à 3, caractérisé en ce que l'on effectue la nitruration initiale en présence d'un gaz riche en azote, additionné d'une petite quantité d'oxyde de carbone.

5. Procédé selon la revendication 4, caractérisé en ce que l'oxyde de carbone est obtenu en effectuant la nitruration dans un four de graphite.

6. Procédé selon l'une des revendications 1 à 5, caractérisé en ce que l'on effectue la nitruration initiale par chauffage du mélange de poudres vers 1 300° à 1 450 °C pendant au moins 6 heures.

7. Procédé selon l'une des revendications 1 à 6, caractérisé en ce que l'on soumet le mélange de poudres nitruré au broyage jusqu'à atteindre une dimension moyenne de particules inférieure à 1 µm.

8. Procédé selon la revendication 7, caractérisé en ce que le broyage est effectué en milieu aqueux à l'aide de billes d'acier.

## Claims

1. A method of manufacturing a sintered material on the basis of silicon nitride by natural sintering in the presence of a small quantity of yttrium oxide, characterized in that the silicon powder mixed with a small quantity of aluminum and yttrium oxide powders is submitted to an essentially total initial nitriding, then the nitrided powder mixture is re-crushed, put into shape and sintered.

2. A method according to claim 1, characterized in that the mixture of silicon, aluminum and yttrium oxide powders is prepared by suspending the powders in a suspension agent, then the suspension is concentrated by centrifuging and then dried.

3. A method according to claim 2, characterized in that the suspension in said agent is submitted to a crushing by means of alumina balls.

4. A method according to one of claims 1 to 3, characterized in that the initial nitriding is carried out in the presence of a gas which is rich in nitrogen and contains a small quantity of carbon oxide.

5. A method according to claim 4, characterized in that the carbon oxide is obtained by carrying out the nitriding in a graphite furnace.

6. A method according to one of claims 1 to 5, characterized in that the initial nitriding is carried out by heating the powder mixture up to between 1 300° and 1 450 °C for at least 6 hours.

7. A method according to one of claims 1 to 6, characterized in that the nitrided powder mixture is crushed until the average particle size is less than 1 µm.

8. A mixture according to claim 7, characterized in that the crushing is carried out in an aqueous medium by means of steel balls.

## Patentansprüche

1. Verfahren zur Herstellung eines gesinterten Materials auf der Basis von Siliciumnitrid durch natürliches Sintern in Gegenwart einer geringen Menge von Yttriumoxid, dadurch gekennzeichnet, daß man das mit ein wenig Aluminiumpulver und Yttriumoxidpulver gemischte Siliciumpulver einer im wesentlichen totalen Initialnitrierung unterwirft, und daß man die nitrierte Pulvermischung wieder zerkleinert, in Form bringt und dann sintert.

2. Verfahren nach Anspruch 1, dadurch gekennzeichnet, daß man die Pulvermischung aus Silicium, Aluminium und Yttriumoxid durch Suspendieren der Pulver in einem Suspendiermittel vorbereitet und dann die Suspension durch Zentrifugieren konzentriert und trocknet.

3. Verfahren nach Anspruch 2, dadurch gekennzeichnet, daß man die Suspension in dem Mittel mithilfe von Tonerdekeramikkugeln zerkleinert.

4. Verfahren nach einem der Ansprüche 1 bis 3, dadurch gekennzeichnet, daß man die Initialnitrierung in Gegenwart eines mit einer kleinen Menge Kohlenoxid angereicherten stickstoffreichen Gases durchführt.

5. Verfahren nach Anspruch 4, dadurch gekennzeichnet, das das Kohlenoxid dadurch erhalten wird, daß man die Nitrierung in einem Graphitofen durchführt.

6. Verfahren nach einem der Ansprüche 1 bis 5, dadurch gekennzeichnet, daß man die a Initialnitrierung durch Erhitzen der Pulvermischung auf 1 300 bis 1 450 °C während mindestens 6 Stunden durchführt.

7. Verfahren nach einem der Ansprüche 1 bis 6, dadurch gekennzeichnet, daß man die nitrierte Pulvermischung soweit zerkleinert, bis man eine mittlere Partikelgröße kleiner als 1 $\mu$m erhält.

8. Verfahren nach Anspruch 7, dadurch gekennzeichnet, daß das Zerkleinern in wässrigem Milieu mithilfe von Stahlkugeln durchgeführt wird.